# EUROPEAN PATENT APPLICATION

(11) **EP 2 778 553 A1**
(43) Date of publication of application: **17.09.2014**
(21) Application number: 13001248.7
(22) Date of filing: 12.03.2013
(51) Int. Cl.: F24F 12/00

(54) **Compact heat recovery ventilation unit**

(71) Applicant: Zehnder Verkaufs- und Verwaltungs AG, 5722 Gränichen (CH)
(72) Inventor: The designation of the inventor has not yet been filed

(57) **Abstract**

The invention relates to a ventilation unit for providing supply air to an apartment or parts thereof and for removing return air from said apartment or parts thereof, said ventilation unit comprising:
a supply air outlet for establishing supply air flow communication with said apartment;
a return air inlet for establishing return air flow communication with said apartment;
an exhaust air outlet for establishing exhaust air flow communication with the atmosphere;
an outside air inlet for establishing outside air flow communication with the atmosphere;
a heat exchanger having first air flow_passages and second air flow passages for transferring heat energy from return air entering said first air flow passages and exhaust air leaving said first air flow passages on the one hand, to outside air entering said second air flow passages and supply air leaving said second air flow passages on the other hand;
a first ventilator at a first location within the ventilation unit, for transporting air through a first air flow path starting at said return air inlet, passing through said first air flow passages in the heat exchanger and ending at said exhaust air outlet; and
a second ventilator at a second location within the ventilation unit, for transporting air through a second air flow path starting at said outside air inlet, passing through said second air flow passages in the heat exchanger and ending at said supply air outlet.

According to the invention, said first air flow path and said second air flow path comprise internal air flow ducts having rectangular cross sections.

## Description

The present invention relates to a ventilation unit for providing supply air, preferably outside air or fresh air, to an apartment or parts thereof and for removing return air, preferably exhaust air or used air, from said apartment or parts thereof.

Heat recovery ventilation units have been used for many years in ventilation systems to recover heat from exhaust air exiting a house or an apartment to the surrounding atmosphere. A heat exchanger is used to transfer heat from the exhaust air exiting the house or the apartment to the outside air entering the house or the apartment. Such ventilation systems comprise an arrangement of ducts for transporting air between selected rooms of an apartment (or house) and the surrounding atmosphere. More precisely, such heat recovery ventilation systems comprise ducts collecting return air (used air) from the rooms, ducts for distributing supply air (fresh air) to the rooms on the one hand, and ducts for transporting exhaust air from the apartment to the atmosphere and ducts for transporting outside air from the atmosphere to the apartment. A heat recovery ventilation unit is located at a crossing point at which the ducts of these four air types meet. Consequently, such heat recovery ventilation units comprise a supply air outlet, a return air inlet, an exhaust air outlet, an outside air inlet and a heat exchanger inside the unit.

It is an object of the invention to provide a heat recovery ventilation unit which, on the one hand, is compact and which, on the other hand, still allows enough air throughput without requiring too much energy for driving the ventilators in the unit and thus, without creating too much air flow noise.

This object is achieved by a ventilation unit for providing supply air, preferably outside air (fresh air), to an apartment or parts thereof and for removing return air, preferably exhaust air (used air), from said apartment or parts thereof, said ventilation unit comprising:
a supply air outlet for establishing supply air flow communication with said apartment;
a return air inlet for establishing return air flow communication with said apartment;
an exhaust air outlet for establishing exhaust air flow communication with the atmosphere;
an outside air inlet for establishing outside air flow communication with an the atmosphere;
a heat exchanger having first air flow passages and second air flow passages for transferring heat energy form return air entering said first air flow passages and exhaust air leaving said first air flow passages on the one hand, to outside air entering said second air flow passages and supply air leaving
said second air flow passages on the other hand;
a first ventilator at a first location within the ventilation unit, for transporting air through a first air flow path starting at said return air inlet, passing through said first air flow passages in the heat exchanger and ending at said exhaust air outlet; and
a second ventilator at a second location within the ventilation unit, for transporting air through a second air flow path starting at said outside air inlet, passing through said second air flow passages and ending at said supply air outlet,
characterized in that
said first air flow path and said second air flow path comprise internal air flow ducts having rectangular cross sections.

Due to the rectangular cross sections of the internal air flow ducts, the ducts can be arranged in a very compact manner within the housing of the heat recovery ventilation unit of the invention, thus allowing relatively large duct cross sections within a minimum of equipment space. As a result, a very compact heat recovery ventilation unit is achieved without reducing the performance with respect to air throughput and noise generation.

Preferably, in the ventilation unit according to the invention, said supply air outlet, said return air inlet, said exhaust air outlet and said outside air inlet all have substantially rectangular air flow cross sections.

Preferably, said first ventilator is located in said first air flow path downstream of the heat exchanger, i.e. between said heat exchanger and said exhaust air outlet. Preferably, said second ventilator is located in said second air flow path downstream of the heat exchanger, i.e. between said heat exchanger and said supply air outlet. More preferably, both said first ventilator and said second ventilator are located downstream of the heat exchanger in their respective air flow path.

Preferably, the air flow cross section of said return air inlet and the air flow cross section of said outside air inlet are greater than the air flow cross section of said supply air outlet and the air flow cross section of said exhaust air outlet. Given the fact that the return air duct portions and the outside air duct portions are driven in suction mode with respect to atmospheric pressure, the greater cross sections in these duct portions minimize overall pressure drop in the first air flow path driven by the first ventilator, on the one hand, and overall pressure drop in the second air flow path driven by the second ventilator, on the other hand. Again, this improves the performance of the unit with respect to air throughput and noise generation.

Preferably, the ventilation unit comprises an optional bypass air flow path bypassing said heat exchanger. More preferably, said bypass flow path comprises two separate flow paths symmetrically bypassing said heat exchanger. Again, this improves the performance of the unit with respect to air throughput and noise generation.

Preferably, a bypass valve is provided which can be moved from a first valve position allowing return air to pass through the heat exchanger along said first air flow path and allowing outside air to pass through the heat exchanger along said second air flow path, to a second valve position allowing return air to bypass the heat exchanger along said first air flow path and allowing outside air to bypass the heat exchanger along said second air flow path. More preferably, said bypass valve is associated to a valve drive unit acting on said bypass valve, and wherein said valve drive unit is located inside the ventilation unit at a central location halfway in between said first air flow path and said second air flow path. This contributes to the compactness of the unit.

Preferably, in the ventilation unit according to the invention, at least a major portion, preferably at least 80%, of the entire length of each of the internal air flow ducts of the ventilation unit are of substantially rectangular flow cross section. Again, this contributes to the compactness of the heat recovery ventilation unit without reducing the performance with respect to air throughput and noise generation.

Preferably, in the ventilation unit according to the invention, said first air flow path and said second air flow path are arranged in a rotationally symmetrical manner with respect to each other with respect to an axis of rotation extending through the ventilation unit and with respect to a 180° rotation of the ventilation unit around said axis of rotation. This improves the versatility of the heat recovery unit with respect to its installation in an apartment.

Preferably, in the ventilation unit according to the invention, a control unit, preferably having a control panel and/or a display panel, for controlling active elements of the ventilation unit such as said first ventilator, said second ventilator and said bypass valve, can be installed at a first location of the ventilation unit or at a second location of the ventilation unit, said first location and said second location being arranged in a rotationally symmetrical manner with respect to each other with respect to said axis of rotation extending through the ventilation unit and with respect to said 180° rotation of the ventilation unit around said axis of rotation. Again, this contributes to the versatility of the heat recovery unit with respect to its installation in an apartment.

Preferably, in the ventilation unit according to the invention, said first ventilator and said second ventilator are arranged in a rotationally symmetrical manner with respect to each other with respect to said axis of rotation extending through the ventilation unit and with respect to a 180° rotation of the ventilation unit around said axis of rotation. Again, this contributes to the versatility of the heat recovery unit with respect to its installation in an apartment.

Preferably, in the ventilation unit according to the invention, said second ventilator can be installed in a first orientation or in a second orientation at its location within the ventilation unit, and wherein a first supply air outlet and a second supply air outlet are provided at different locations within the ventilation unit, said first orientation and said second orientation preferably being opposite to each other. Again, this contributes to the versatility of the heat recovery unit with respect to its installation in an apartment.

### Brief description of the drawings:

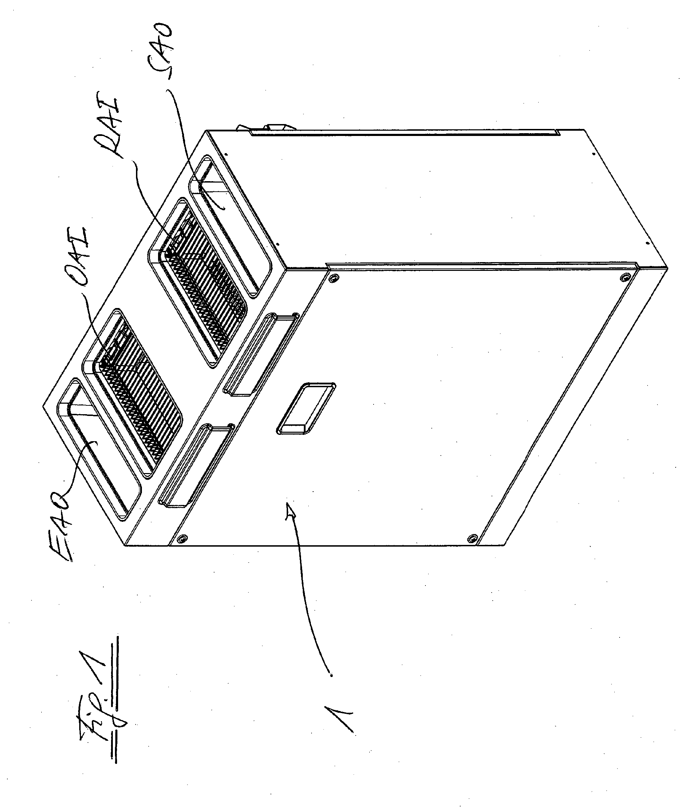

Fig. 1 is a perspective view of an embodiment of the heat recovery ventilation unit according to the invention.

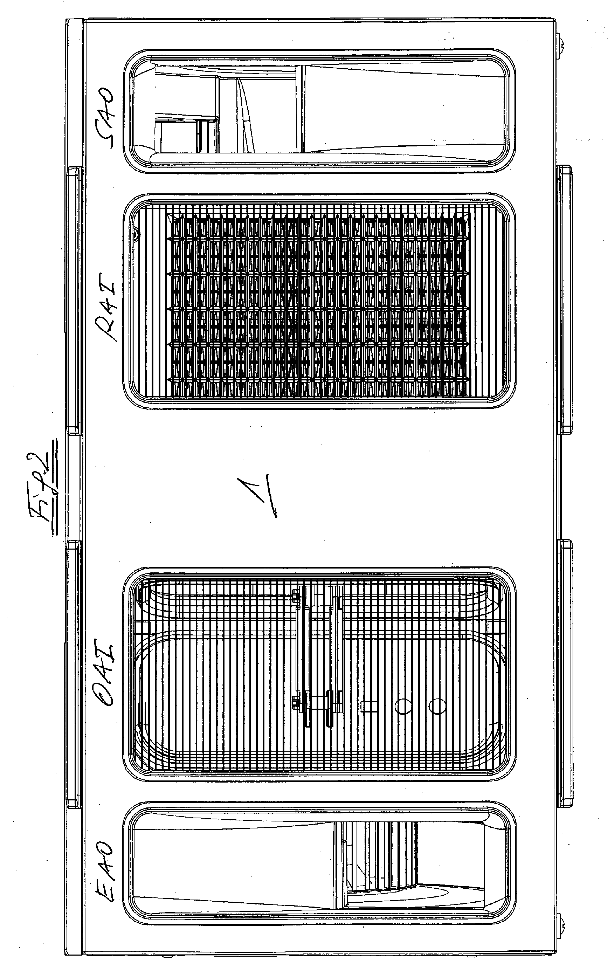

Fig. 2 is a top view of the embodiment of the heat recovery ventilation unit according to the invention.

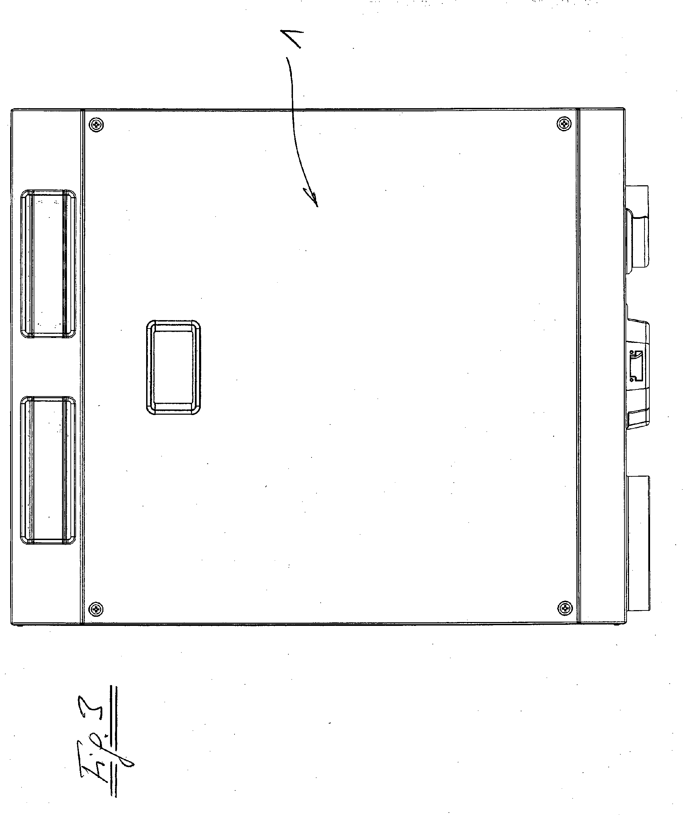

Fig. 3 is a front view of the embodiment of the heat recovery ventilation unit according to the invention.

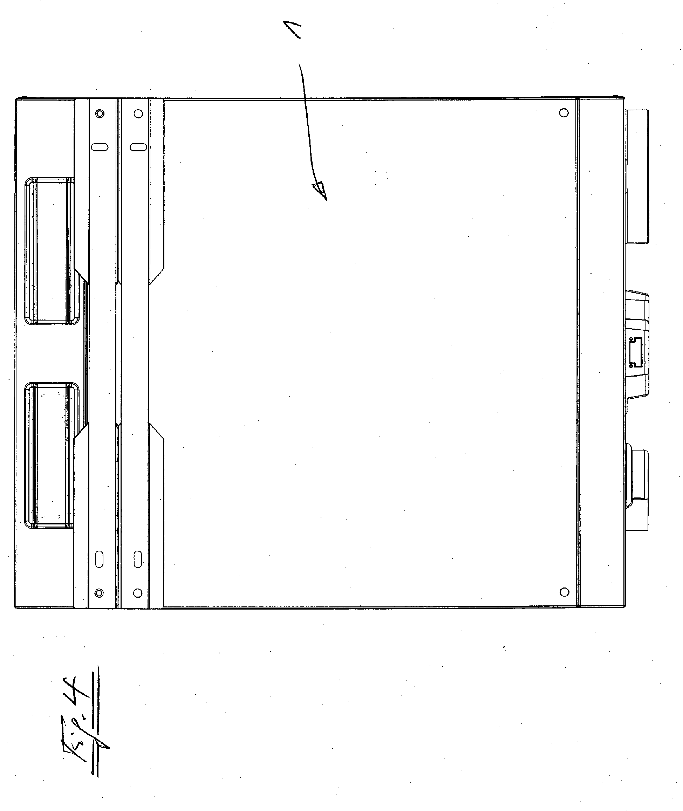

Fig. 4 is a rear view of the embodiment of the heat recovery ventilation unit according to the invention.

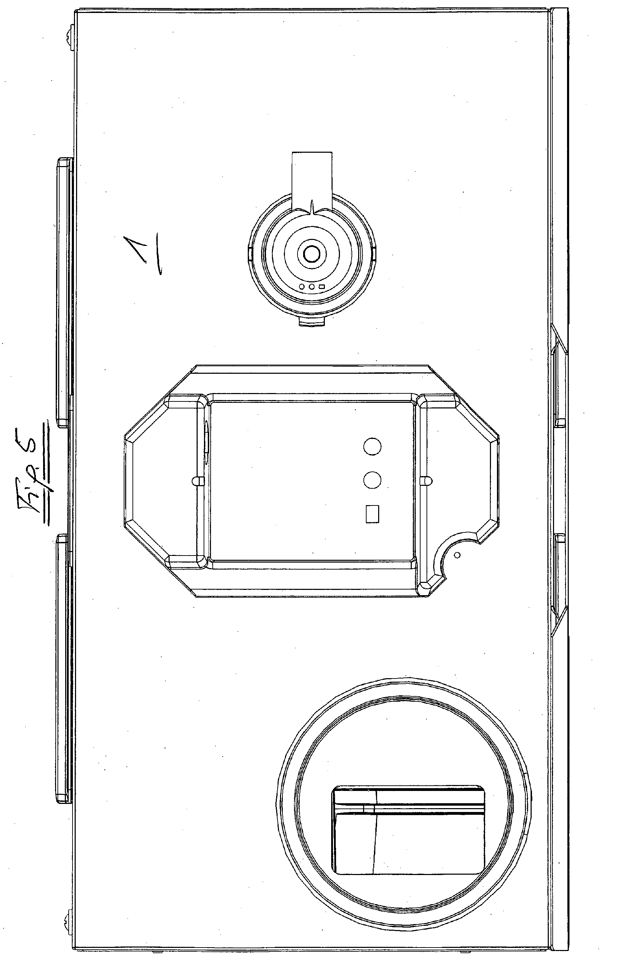

Fig. 5 is a bottom view of the embodiment of the heat recovery ventilation unit according to the invention.

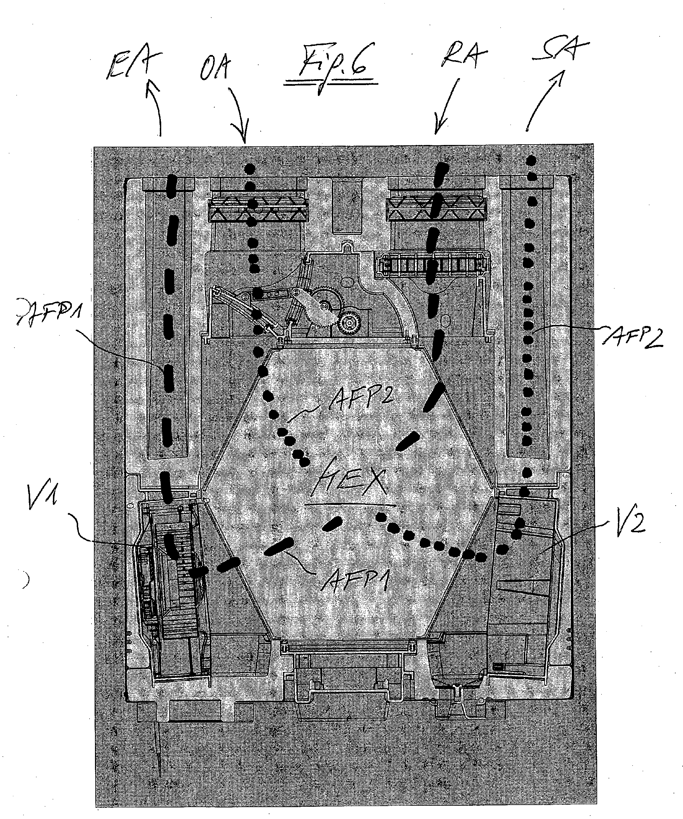

Fig. 6 is a front view, with the front cover removed, of the embodiment of the heat recovery ventilation unit according to the invention.

The heat recovery ventilation unit 1 provides supply air SA, preferably outside air or fresh air, to an apartment or parts thereof, and removes return air RA, preferably exhaust air or used air, from said apartment or parts thereof.

The ventilation unit 1 comprises a supply air outlet SAO for establishing supply air flow communication with said apartment, a return air inlet RAI for establishing return air flow communication with said apartment, an exhaust air outlet EAO for establishing exhaust air flow communication with the atmosphere, and an outside air inlet OAI for establishing outside air flow communication with the atmosphere.

In addition, the unit 1 comprises heat exchanger HEX having first air flow passages (not shown) and second air flow passages (not shown) for transferring heat energy form return air entering said first air flow passages and exhaust air leaving said first air flow passages on the one hand, to outside air entering said second air flow passages and supply air leaving said second air flow passages on the other hand, is provided in the heat recovery ventilation unit. In addition, the unit 1 comprises a first ventilator V1 at a first location within the ventilation unit 1, for transporting air through a first air flow path AFP1 starting at said return air inlet RAI, passing through said first air flow passages in the heat exchanger HEX and ending at said exhaust air outlet EAO, and a second ventilator V2 at a second location within the ventilation unit 1, for transporting air through a second air flow path AFP2 starting at said outside air inlet OAI, passing through said second air flow passages in the heat exchanger HEX and ending at said supply air outlet SAO.

The first air flow path AFP1 and the second air flow path AFP2 comprise internal air flow ducts having rectangular cross sections.

## Claims

1. A ventilation unit for providing supply air, preferably outside air (fresh air), to an apartment or parts thereof and for removing return air, preferably exhaust air (used air), from said apartment or parts thereof, said ventilation unit comprising:
a supply air outlet for establishing supply air flow communication with said apartment;
a return air inlet for establishing return air flow communication with said apartment;
an exhaust air outlet for establishing exhaust air flow communication with the atmosphere;
an outside air inlet for establishing outside air flow communication with the atmosphere;
a heat exchanaer having first air flow passages and second air flow passages for transferring heat energy from return air entering said first air flow passages and exhaust air leaving said first air flow passages on the one hand, to outside air entering said second air flow passages and supply air leaving said second air flow passages on the other hand;
a first ventilator at a first location within the ventilation unit, for transporting air through a first air flow path starting at said return air inlet, passing through said first air flow passages in the heat exchanger and ending at said exhaust air outlet; and
a second ventilator at a second location within the ventilation unit, for transporting air through a second air flow path starting at said outside air inlet, passing through said second air flow passages in the heat exchanger and ending at said supply air outlet,
**characterized in that**
said first air flow path and said second air flow path comprise internal air flow ducts having rectangular cross sections.

2. The ventilation unit as defined in claim 1, wherein said supply air outlet, said return air inlet, said exhaust air outlet and said outside air inlet all have substantially rectangular air flow cross sections.

3. The ventilation unit as defined in claim 1 or 2, wherein said first ventilator is located in said first air flow path downstream of the heat exchanger, i.e. between said heat exchanger and said exhaust air outlet.

4. The ventilation unit as defined in any one of claims 1 to 3, wherein said second ventilator is located in said second air flow path downstream of the heat exchanger, i.e. between said heat exchanger and said supply air outlet.

5. The ventilation unit as defined in any one of claims 1 to 4, wherein both said first ventilator and said second ventilator are located downstream of the heat exchanger in their respective air flow path.

6. The ventilation unit as defined in claim 5, wherein the air flow cross section of said return air inlet and the air flow cross section of said outside air inlet are greater than the air flow cross section of said supply air outlet and the air flow cross section of said exhaust air outlet.

7. The ventilation unit as defined in any one of claims 1 to 6, **characterized in that** it comprises an optional bypass air flow path bypassing said heat exchanger.

8. The ventilation unit as defined in claim 7, wherein said bypass flow path comprises two separate flow Paths symmetrically bypassing said heat exchanger.

9. The ventilation unit as defined in claim 7 or 8, wherein a bypass valve is provided which can be moved from a first valve position allowing return air to pass through the heat exchanger along said first air flow path and allowing outside air to pass through the heat exchanger along said second air flow path, to a second valve position allowing return air to bypass the heat exchanger along said first air flow path and allowing outside air to bypass the heat exchanger along said second air flow path.

10. The ventilation unit as defined in claim 9, wherein said bypass valve is associated to a valve drive unit acting on said bypass valve, and wherein said valve drive unit is located inside the ventilation unit at a central location halfway in between said first air flow path and said second air flow path.

11. The ventilation unit as defined in any one of claims 1 to 10, wherein at least a major portion, preferably at least 80%, of the entire length of each of the internal air flow ducts of the ventilation unit are of substantially rectangular flow cross section.

12. The ventilation unit as defined in any one of claims 1 to 11, wherein said first air flow path and said second air flow path are arranged in a rotationally symmetrical manner with respect to each other with respect to an axis of rotation extending through the ventilation unit and with respect to a 180° rotation of the ventilation unit around said axis of rotation.

13. The ventilation unit as defined in claim 12, wherein a control unit, preferably having a control panel and/or a display panel, for controlling active elements of the ventilation unit such as said first ventilator, said second ventilator and said bypass valve, can be installed at a first location of the ventilation unit or at a second location of the ventilation unit, said first location and said second location being arranged in a rotationally symmetrical manner with respect to each other with respect to said axis of rotation extending through the ventilation unit and with respect to said 180° rotation of the ventilation unit around said axis of rotation.

14. The ventilation unit as defined in any one of claims 1 to 13, wherein said first ventilator and said second ventilator are arranged in a rotationally symmetrical manner with respect to each other with respect to said axis of rotation extending through the ventilation unit and with respect to a 180° rotation of the ventilation unit around said axis of rotation.

15. The ventilation unit as defined in any one of claims 1 to 14, wherein said second ventilator can be installed in a first orientation or in a second orientation at its location within the ventilation unit, and wherein a first supply air outlet and a second supply air outlet are provided at different locations within the ventilation unit, said first orientation and said second orientation preferably being opposite to each other.
